# EUROPEAN PATENT APPLICATION

(11) **EP 1 901 395 A1**
(43) Date of publication of application: **19.03.2008**
(21) Application number: 06767799.7
(22) Date of filing: 04.07.2006
(51) Int. Cl.: H01Q 9/16, H01Q 1/24, H04B 1/38

(54) **PORTABLE WIRELESS DEVICE**

(30) Priority: 07.07.2005 JP 2005198713
(71) Applicant: MATSUSHITA ELECTRIC INDUSTRIAL CO., LTD., Osaka 571-8501 (JP)
(72) Inventor: TANI, Kazuya c/o Matsushita Electric Industrial Co., Ltd., Chuo-ku Osaka-shi Osaka 540-6207 (JP); KOYANAGI, Yoshio c/o Matsushita Electric Industrial Co., Ltd., Chuo-ku Osaka-shi Osaka 540-6207 (JP)
(74) Representative: Pautex Schneider, Nicole Véronique
(86) International application number: PCT/JP2006/313268
(87) International publication number: WO 2007/007584

(57) **Abstract**

A portable wireless device is capable of maintaining performance of an antenna without being affected by the state of the housing fitted with the antenna even if the housing is rotated around a rotation axis thereof by a predetermined angle. A portable wireless device **10** comprises an upper casing **21** provided with a balanced antenna **43** and a facing section **22a** to be faced with the upper casing **21.** The portable wireless device has two states including a first facing state in which the housing is in face to face relationship with the facing section and a second facing state in which the housing rotated around a rotation axis thereof by a predetermined angle is in face to face relationship with the facing section. The balanced antenna **43** has a shape symmetrical about a rotation axis **23b** that is a rotation axis of the upper casing.

## Description

### Technical Field ofthe Invention

This invention relates to a portable wireless device such as a cellular phone and a personal digital assistance.

### Background of the Invention

In recent years, there have been proposed, in response to the start of the digital terrestrial broadcasting and the expansion of the way in which portable wireless devices are used with high speed communication services, a wide variety of portable wireless devices of this type, one typical example of which has a main unit and a flip unit including an image display unit, the flip unit being connected with the main unit through a two-axis hinge and the like so that the flip unit is able not only to be open and closed but also to be reversed with respect to the main unit (refer to, for example, Patent Documents 1).

On the other hand, it is known that the portable wireless device comprises an antenna installed in a housing without having an effect on its design (refer to, for example, Patent Documents 2 or 3).
Patent Document 1: Japanese Patent Laid-Open Publication No. 2004-214988
Patent Document 2: Japanese Patent Laid-Open Publication No. 2004-165826
Patent Document 3: Japanese Patent Laid-Open Publication No. 2003-37415

### Disclosure of the Invention

### Problems to be solved by the Invention

It is estimated that the above mentioned portable wireless device will become more and more popular in response to the start of the digital terrestrial broadcasting and the expansion of the way in which the portable wireless device is used with high speed communication services, and is expected to be often used under the condition that the flip unit (hereinafter referred to as "reversible unit") has an inner surface provided with a main display unit such as a liquid crystal display, and assumes two different states including an inverted state in which the main display unit provided on the inner surface is visible from the outside, and a non-inverted state in which the main display unit provided on the inner surface is not visible from the outside. The portable wireless device is expected to perform with another device when in the inverted state and when in the non-inverted state.

The conventional portable wireless device, however, encounters such a problem that the performance of the antenna tends to be significantly affected and changed by the difference between the space to be occupied by the antenna when the reversible unit is in the inverted state and the space to be occupied by the antenna when the reversible unit is in the non-inverted state.

It is, therefore, an object of the present invention to provide a portable wireless device that can maintain the performance of an antenna without being affected by the state of the housing fitted with the antenna even if the housing is rotated around a rotation axis thereof by a specified angle.

### Means for Solving the Problems

The portable wireless device according to the present invention comprises a housing provided with a balanced antenna and a facing section to be faced with the housing, in which the portable wireless device has two states including a first facing state in which the housing is in face to face relationship with the facing section and a second facing state in which the housing rotated around a rotation axis thereof by a predetermined angle is in face to face relationship with the facing section, and the balanced antenna has a shape symmetrical about the rotation axis of the housing.

The portable wireless device thus constructed as previously mentioned can maintain the performance of the antenna without being affected by the state of the housing fitted with the antenna even if the housing is rotated around the rotation axis thereof by the predetermined angle.

The portable wireless device according to the present invention comprises a housing provided with a balanced antenna and a facing section to be faced with the housing, in which the portable wireless device has two states including a first facing state in which the housing is in face to face relationship with the facing section and a second facing state in which the housing rotated around a rotation axis thereof by a predetermined angle is in face to face relationship with the facing section, the balanced antenna has a shape symmetrical about a predetermined axis pointed in a direction perpendicular to the surface of the facing section, the predetermined axis being perpendicular to the rotation axis, under the condition that the housing is in face to face relationship with the facing section, or under the condition that the housing rotated around the rotation axis by the predetermined angle is in face to face relationship with the facing section.

The portable wireless device thus constructed as previously mentioned can maintain the performance of the antenna without being affected by the state of the housing fitted with the antenna even if the housing is rotated around the rotation axis thereof by the predetermined angle.

The portable wireless device according to the present invention may comprise a balanced feeder circuit for feeding the balanced antenna on the rotation axis.

The portable wireless device according to the present invention may comprise a balanced-unbalanced transformer and an unbalanced feeder circuit for feeding the balanced antenna through the balanced-unbalanced transformer.

In the portable wireless device according to the present invention, the balanced antenna has a plurality of antenna elements extending from the balanced feeder circuit, each of the plurality of antenna elements being equal in length to or greater in length than a half of a wavelength of a current flowing through each of the plurality of antenna elements.

As the portable wireless device thus constructed as previously mentioned can reduce the peak value of the current flowing through each antenna element, the portable wireless device can prevent unnecessary interference between the antenna elements and the casing and can stabilize the performance of the antenna without being affected by the state of the housing fitted with the antenna even if the housing is rotated around the rotation axis thereof by the predetermined angle.

The portable wireless device according to the invention may comprise an unbalanced feeder circuit, a ground unit and a matching circuit for connecting said unbalanced feeder circuit and said ground unit with said balanced antenna.

The portable wireless device according to the present invention comprises a housing provided with two unbalanced antennas, a facing section to be faced with the housing, detecting means for detecting the state of the housing with respect to the facing section, switching means for switching one of the two unbalanced antennas to the other one that is used for communications in accordance with a result of the detection performed by the detecting means, in which the portable wireless device has two states including a first facing state in which the housing is in face to face relationship with the facing section and a second facing state in which the housing rotated around a rotation axis thereof by a predetermined angle is in face to face relationship with the facing section, the two unbalanced antennas have a shape symmetrical about the rotation axis of the housing with respect to the facing section.

The portable wireless device thus constructed as previously mentioned can maintain the performance of the antenna without being affected by the state of the housing fitted with the antenna even if the housing is rotated around the rotation axis thereof by the predetermined angle.

### Effect of the Invention

The present invention provides a portable wireless device that can maintain the performance of an antenna without being affected by the state of the housing fitted with the antenna even if the housing is rotated around a rotation axis thereof by a specified angle.

### Brief Description of Drawings

The characteristics and advantages of the portable wireless device according to the present invention will be apparent from the following description, taken in conjunction with the accompanying drawings.
Fig. 1(a) is a perspective view of a portable wireless device according to a first embodiment of the present invention when an upper casing is in a first facing state.
Fig. 1(b) is a perspective view of the portable wireless device shown in Fig. 1(a) when an upper casing is in a second facing state.
Fig. 2(a) is a front elevational view of the portable wireless device shown in Fig.1, showing an example of the shape of a balanced antenna.
Fig. 2(b) is a front elevational view ofthe portable wireless device shown in Fig. 1, showing an example of the shape of a balanced antenna different from the example shown in Fig 2(a).
Fig. 2(c) is a front elevational view of the portable wireless device shown in Fig. 1, showing an example of the shape of a balanced antenna different from the examples shown in Fig. 2(a) and Fig. 2(b).

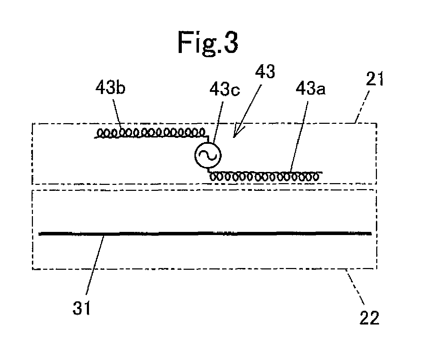

Fig. 3 is a front elevational view of the portable wireless device shown in Fig. 1, showing an example of the shape of a balanced antenna different from the examples shown in Figs. 2(a) to 2(c).
Fig. 4 is a front elevational view of the portable wireless device shown in Fig. 1, showing an example of a current distribution.
Fig. 5 is a front elevational view of the portable wireless device shown in Fig. 1, showing a radiation pattern of radio waves in the state shown in Fig. 4.
Fig. 6 is a front elevational view of the portable wireless device shown in Fig. 1, showing an example of a radiation pattern of radio waves different from the example shown in Fig. 4.
Fig. 7 is a front elevational view of the portable wireless device shown in Fig. 1, showing an example of the shape of a balanced antenna different from the examples shown in Fig. 2(a) to 2(c) and Fig. 3.
Fig. 8 is a front elevational view of the portable wireless device shown in Fig.1, showing an example of the shape of a balanced antenna different from the examples shown in Fig. 2(a) to 2(c), Fig. 3 and Fig. 7.
Fig. 9(a) is a partial plan view of the portable wireless device shown in Fig. 1 focusing on the balanced antenna, showing an example of a method for feeding the balanced antenna.
Fig. 9(b) is a partial plan view of the portable wireless device shown in Fig. 1 focusing on the balanced antenna, showing an example of a method for feeding the balanced antenna.
Fig. 10(a) is a perspective view of a portable wireless device according to a second embodiment of the present invention when an upper casing is in a first facing state.
Fig. 10(b) is a perspective view of the portable wireless device shown in Fig. 10 (a) when the upper casing is in a second facing state.
Fig. 11(a) is a perspective view of a portable wireless device according to a third embodiment of the present invention when an upper casing is in a first facing state.
Fig. 11(b) is a perspective view ofthe portable wireless device shown in Fig. 11(a) when the upper casing is in a second facing state.

### Description of the reference numerals

**10:** portable wireless device
**21:** upper casing (housing)
**22a:** facing section
**23b:** rotation axis (reverse axis)
**41:** balanced transmit-receive radio frequency circuit (balanced feeder circuit)
**42:** matching circuit
**43:** balanced antenna
**45:** balanced-unbalanced transformer
**46:** unbalanced transmit-receive radio frequency circuit (unbalanced feeder circuit)
**47:** ground unit
**70:** portable wireless device
**71:** axis (predetermined axis)
**80:** portable wireless device
**81,82:** unbalanced antenna
**83:** switching circuit (switching means)
**84:** sensor unit (detecting means)

### Detailed description of the Invention

### (First Embodiment)

**The** configuration of a portable wireless device according to the first embodiment will be described.

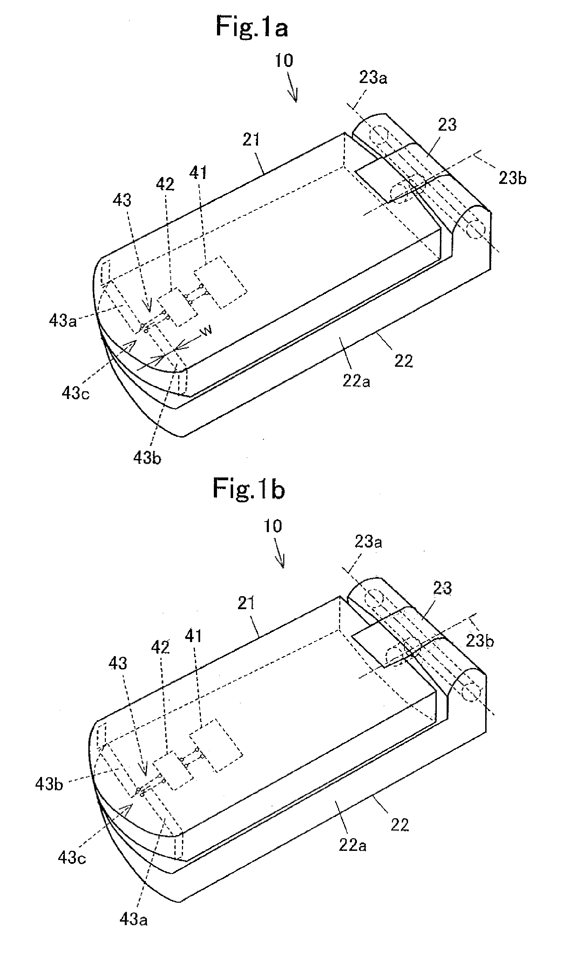

As shown in Figs. **1(a)** and **1(b)**, a portable wireless device **10** according to the first embodiment comprises an upper casing **21,** a lower casing **22** having a facing section **22a** to be faced with the upper casing **21,** and a two-axis hinge **23** that is supported by the lower casing **22** and pivotably movable about a rotation axis **23a** and that supports the upper casing **21** and rotatably movable about a rotation axis **23b** perpendicular to the rotation axis **23a**. In Fig. 1(a), the portable wireless device **10** is in a first facing state where the upper casing **21** is in face to face relationship with the facing section **22a.** The upper casing **21** is designed to pivots about the rotation axis **23a** by use of the two-axis hinge **23** in a direction of the side opposite to the lower casing **22,** then rotates 180 degrees about the rotation axis **23b** by use of the two-axis hinge **23,** and then pivots about the rotation axis **23a** by use of the two-axis hinge **23** in a direction of the side of the lower casing **22,** resulting in the fact that the portable wireless device **10** is in a second facing state where the upper casing **21** rotated about the rotation axis **23b** by 180 degrees is in face to face relationship with the facing section **22a** as shown in Fig. **1(b)****.**

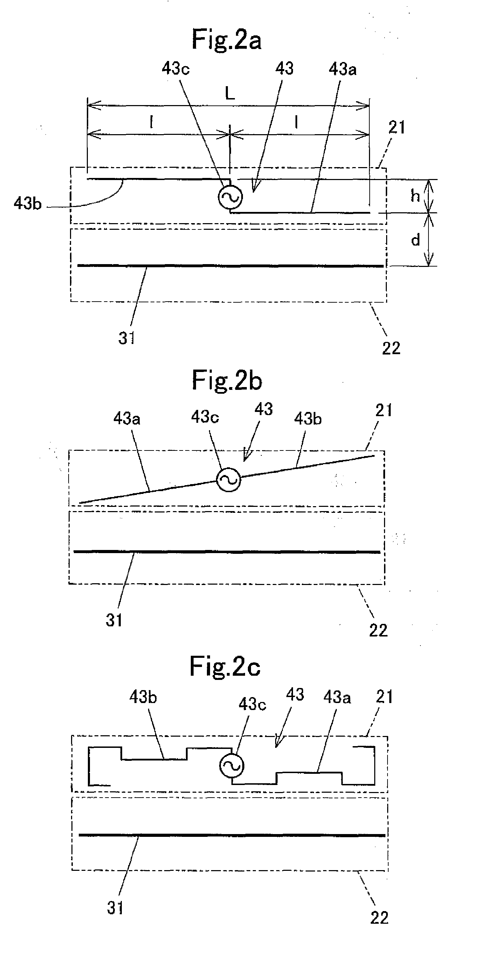

The portable wireless device **10** has a ground substrate **31** (see Fig. **2****)** provided in the lower casing **22.** The portable wireless device **10** further has a balanced transmit-receive radio frequency circuit **41,** a matching circuit **42** connected to the balanced transmit-receive radio frequency circuit **41** and a balanced antenna **43** connected to the matching circuit **42** provided in the upper casing **21.** This means that the upper casing **21** constitutes a housing.

The balanced antenna **43** has antenna elements **43a** and **43b** and a feeder unit **43c** disposed on the rotation axis **23b** that is an axis (reverse axis) of the reversal of the upper casing **21** with respect to the facing section **22a.** The balance antenna **43** is disposed in the upper casing **21** and has a shape with 180-degree rotational symmetry about the rotation axis **23b.** Examples of the shapes of the balanced antenna **43** are shown in Figs **2(a)** to **2(c)**. Furthermore, the balanced antenna **43** may take the form of a helical structure, meander structure and the like to be operable over a low frequency band and to expand a frequency band in which the balanced antenna **43** is operable. The antenna elements **43a** and **43b** are formed by, for example, a conducting line, a band-shaped conducting line, a dielectric material capable of reducing the electrical length of the balanced antenna **43,** or the like. The balanced transmit-receive radio frequency circuit **41** is preferably formed on the reverse axis since the distance between the balanced transmit-receive radio frequency circuit **41** and the antenna affects the length of the antenna.

Next, the operation of the portable wireless device **10** will be described.

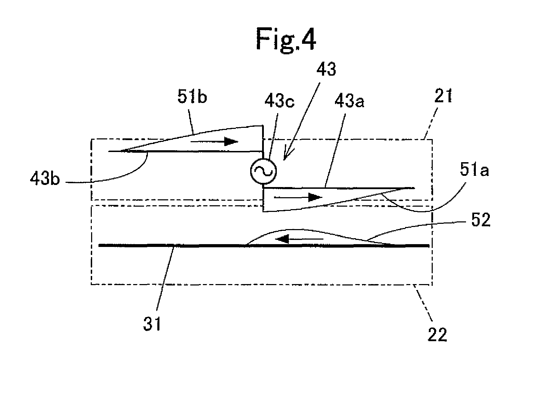

The current distribution of the portable wireless device **10** simulated by using a finite difference time domain (FDTD) method is shown in Fig. **4****.** In this case, the balanced antenna **43** has a shape shown in Fig. **2(a)****,** the balanced antenna **43** operates at substantially a half of a wavelength λ of a target frequency 2.0 GHz, each of the antenna elements **43a** and **43b** has a width (w) (see Fig. **1(a)****)** of 3.0 mm and a length (1) of 33 mm, the total length (L) of the antenna elements **43a** and **43b** is 66 mm, the distance (d) between either one of the antenna elements **43a** and **43b** that is closer to the ground substrate **31** and the ground substrate **31** is 4 mm, and a distance (h) of movement of each of the antenna elements **43a** and **43b** due to the reversal of each of the antenna elements **43a** and **43b** is 10 mm.

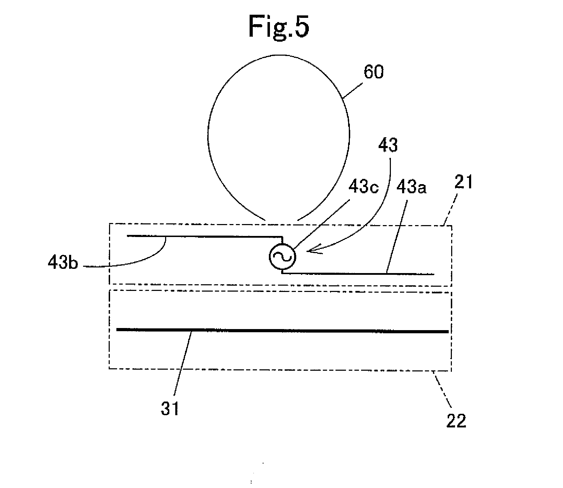

In Fig. 4, currents **51a** and **51b** having the same phase as each other flow through the antenna elements **43a** and **43b,** respectively, while a current **52** that is in antiphase with the current **51a** flows through the ground substrate **31.** Thus, in the first facing state where the antenna element **43a** is close to the ground substrate **31,** the antenna element **43b** separated from the ground substrate **31** greatly contributes as a radiating element for radiating radio waves while the antenna element **43a** does not greatly contribute as a radiating element for radiating radio waves due to the effect of the ground substrate **31.** The radiation pattern of radio waves from the balanced antenna **43** in the first facing state shown in Fig. **4** is like a pattern **60** shown in Fig. **5****.**

In the second state (not shown) where the upper casing **21** rotated about the rotation axis **23b** by 180 degrees is in face to face relationship with the facing section **22a** and the antenna element **43b** is close to the ground substrate **31,** the antenna element **43a** separated from the ground substrate **31** greatly contributes as a radiating element for radiating radio waves while the antenna element **43b** does not greatly contribute as a radiating element for radiating radio waves due to the effect of the ground substrate **31.** Since the balanced antenna **43** has a shape with 180-degree rotational symmetry about the rotation axis 23b, the radiation capacity of the whole balanced antenna **43** is the same before and after the reversal ofthe balanced antenna. **43.**

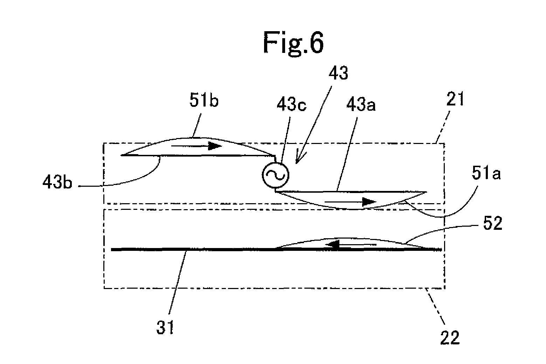

The current distribution of the portable wireless device **10** simulated by using the FDTD method is like the one shown in Fig. **6****.** In this case, the balanced antenna **43** having a shape shown in Fig. **2(a)** is used, and operates at substantially the wavelength λ; each of the antenna elements **43a** and **43b** has the width (w) of 3.0 mm and the length (1) of 33 mm; the total length (L) of the antenna elements **43a** and **43b** is 66 mm; the distance (d) is 4 mm; and the distance (h) is 10 mm. As the current distribution on the antenna elements **43a** and **43b** is concentrated near the feeder unit **43c,** the peak values of the currents on the antenna elements **43a** and **43b** are large in the case that the balanced antenna **43** operates at substantially a half of the wavelength λ as shown in Fig. **4****.** In contrast, as the currents on the antenna elements **43a** and **43b** reach the peak values near the center of each of the antenna elements **43a** and **43b** respectively in the case that the balanced antenna **43** operates at substantially the wavelength λ as shown in Fig. **6****,** the peak values of the currents on the antenna elements **43a** and **43b** is small compared with the case in which the balanced antenna **43** operates at substantially a half of wavelength λ. Likewise, in the case that the balanced antenna **43** operates at substantially 3/4 of wavelength λ, the peak values of the currents on the antenna elements **43a** and **43b** is small compared with the case in which the balanced antenna **43** is operated at substantially a half of wavelength λ.

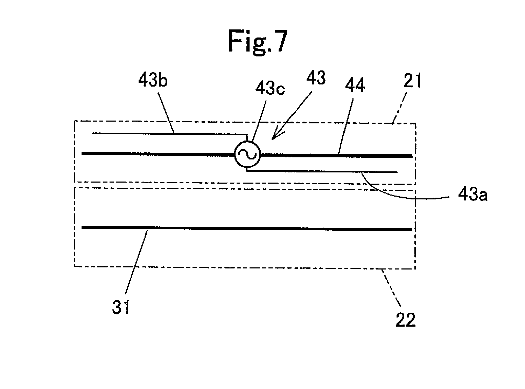

In the case that the portable wireless device **10** includes a ground substrate **44** disposed between the antenna elements **43a** and **43b** in the upper casing **21** as shown in Fig. **7****,** either one of the antenna elements **43a** and **43b** that is disposed between the ground substrate **31** and the ground substrate **44** does not contribute as a radiating element for radiating radio waves compared with that in the state shown in Fig. **4** due to the effect of both the ground substrate **31** and the ground substrate **44.** However, the radiation capacity of the whole balanced antenna **43** is the same before and after the reversal, since the balanced antenna **43** has a shape with 180-degree rotational symmetry about the rotation axis **23b.**

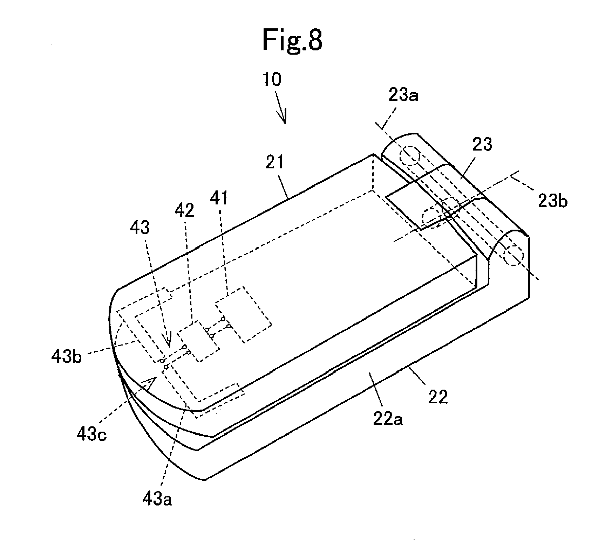

In the case that the distance between the antenna element **43a** and the ground substrate **31** (see Fig. **2****)** and the distance between the antenna element **43b** and the ground substrate **31** are the same, the abilities of both the antenna elements **43a** and **43b** as radiating elements for radiating radio waves equally slightly deteriorates. However, the radiation capacity of the whole balanced antenna **43** is the same before and after the reversal since the balanced antenna **43** has a shape with 180-degree rotational symmetry about the rotation axis **23b.** In the portable wireless device **10,** the balanced antenna **43** shown in Fig. **8** may be formed by an antenna pattern shaped on the ground substrate **44** included in the upper casing **21** as shown in Fig. **7****.**

As described above, the portable wireless device **10** can maintain the performance of the balanced antenna **43** regardless of whether the upper casing **21** is in the first facing state or in the second facing state. Thus the portable wireless device **10** can exhibit stable sensitivity when performing communications regardless of whether the upper casing **21** is in the first facing state or in the second facing state.

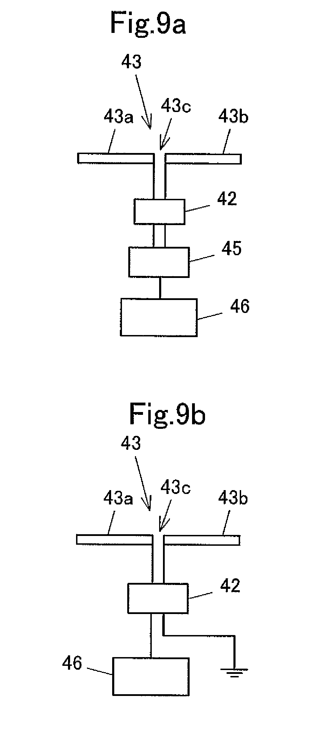

The portable wireless device **10** comprises the balanced transmit-receive radio frequency circuit **41** that is a balanced feeder circuit for feeding the balanced antenna The portable wireless device **10,** however, may have an unbalanced feeder circuit to feed the balanced antenna **43 b.** The portable wireless device **10** may include, for example, a balanced-unbalanced transformer **45** and an unbalanced transmit-receive radio frequency circuit **46 as** an unbalanced feeder circuit in place of the balanced transinit-receive radio frequency circuit **41** as shown in Fig. **9(a)** to feed the balanced antenna **43** from the unbalanced transmit-receive radio frequency circuit **46** through the balanced-unbalanced transformer **45.** Furthermore, the portable wireless device **10,** as shown in Fig. **9(b)****,** may comprise the unbalanced transmit-receive radio frequency circuit **46** and a ground unit **47** in place of the balanced transmit-receive radio frequency circuit **41** to feed the balanced antenna **43** from the unbalanced transmit-receive radio frequency circuit **46** through the matching circuit **42.** In this case, the portable wireless device **10** can obtain a characteristic similar to that of the balanced antenna since the current flows also to the antenna element **43b** by optimally adjusting the matching circuit **42.**

The present invention is not limited to the above-described embodiment in which the casing provided with the antenna can be reversed 180 degrees with respect to the other casing and the antenna has the shape with 180-degree rotational symmetry about the reverse axis. Even in the case that the casing provided with the antenna can be rotated through a predetermined angle other than 180 degrees with respect to the other casing, the predetermined angle can be any angle as long as the antenna has a shape with the predetermined angle of rotational symmetry about the rotation axis of the casing provided with the antenna.

The present invention is not limited to the above-described embodiment in which the antenna comprises two antenna elements. The antenna may comprise any number of antenna elements as long as the antenna provided in the casing has a shape with rotational symmetry about the reverse axis of the casing provided with the antenna regardless of whether the portable wireless device is in the state where the casing is in face to face relationship with the facing section or in the state where the casing rotated about the rotation axis thereof by 180 degrees is in face to face relationship with the facing section.

### (Second Embodiment)

The configuration of a portable wireless device according to the second embodiment will be described.

Some of components of the portable wireless device according to the second embodiment, which are similar to those of the portable wireless device **10** according to the first embodiment (see Fig.**1**), are assigned the same reference numerals to thereby omit description thereof

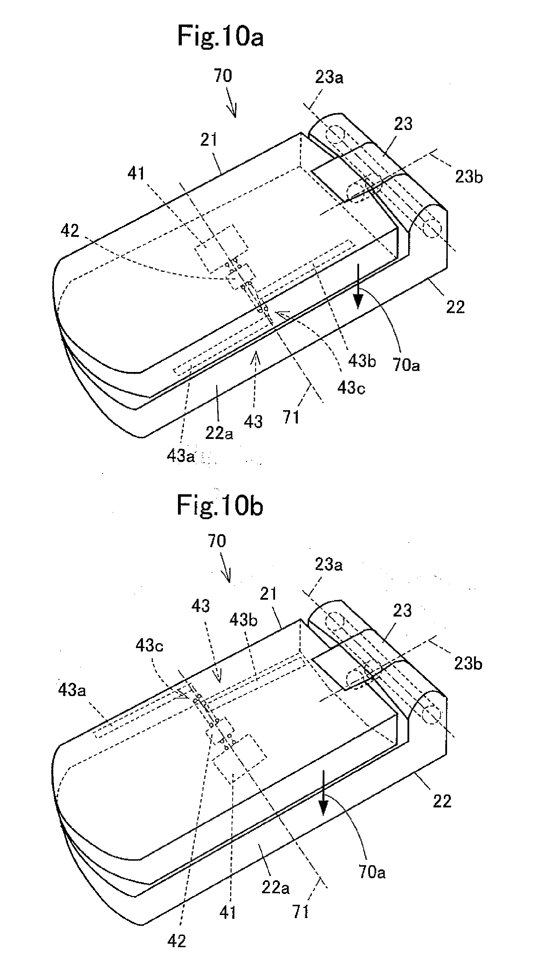

The position of the balanced antenna **43** disposed in the upper casing **21** of the portable wireless device **70** according to the second embodiment is different from that of the balanced antenna **43** of the portable wireless device **10** as shown in Fig. **10**.

The balanced antenna **43** of the portable wireless device **70** has the feeder unit **43c** disposed on a predetermined axis **71** and has a shape with 180-degree rotational symmetry about the axis **71.**

The axis **71** extends in a direction perpendicular to a direction shown by an arrow **70a** pointing toward the facing section **22a** from the upper casing **21** and to an extension of the rotation axis **23b** that is the reverse axis of the upper casing **21** when the portable wireless device **70** is in a first facing state where the upper casing **21** is in face to face relationship with the facing section **22a** as shown in Fig. **10(a)** and in a second facing state where the upper casing **21** rotated about the rotation axis **23b** by 180 degrees is in face to face relationship with the facing section **22a** is as shown in Fig. **10(b)****.**

The portable wireless device **70** can maintain the performance of the balanced antenna **43** regardless of whether portable wireless device **70** is in the first facing state or in the second facing state in the same way as the portable wireless device **10** according to the first embodiment, although the radiation pattern of the balanced antenna **43** is reversed with respect to the rotation axis **23b** before and after the reversal of the upper casing **21.** Thus, the portable wireless device **70** can exhibit stable sensitivity when performing communications regardless of whether the upper casing **21** is in the first state or in the second state.

In the portable wireless device **70,** the balanced antenna **43** may have any of the same shapes as in the first embodiment, and the method for feeding the balanced antenna **43** may be used in the same ways as in the first embodiment

The present invention is not limited to the above-described embodiment in which the casing provided with the antenna can be reversed 180 degrees with respect to the other casing and the antenna has a shape with 180-degree rotational symmetry about the reverse axis of the casing provided with the antenna. Even in the case that the casing provided with the antenna can be rotated through a predetermined angle other than 180 degrees with respect to the other casing, the predetermined angle can be any angle as long as the antenna has a shape with rotational symmetry about the rotation axis of the casing provided with the antenna.

The present invention is not limited to the above-described embodiment in which the antenna comprises two antenna elements. The antenna may comprise any number of antenna elements as long as the antenna provided in the casing has a shape with rotational symmetry about the reverse axis of the casing provided with the antenna.

### (Third Embodiment)

The configuration of a portable wireless device according to the third embodiment will be described.

The components of the portable wireless device according to the present embodiment, which are similar to those of the portable wireless device **10** according to the first embodiment, (see Fig. **1**) are assigned the same reference numerals to thereby omit description thereof.

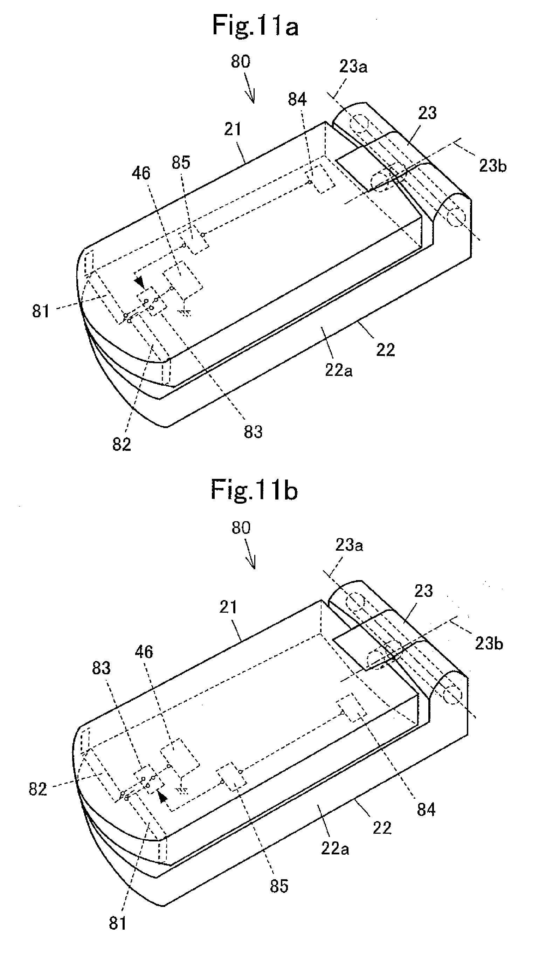

The portable wireless device **80** according to the present embodiment comprises an unbalanced transmit-receive radio frequency circuit 46, unbalanced antennas **81** and **82,** a switching circuit **83** as switching means for switching to one of the unbalanced antennas **81** and **82** to be connected with the unbalanced transmit-receive radio frequency circuit **46** and used for communications, a sensor unit **84** as a detecting means for detecting the state of the upper casing **21** with respect to the facing section 22a, and a control unit **85** for causing the switching circuit **83** to switch the state of the connection in accordance with a detection result obtained by the sensor unit **84** in the upper casing **21** as shown in Fig. **11**.

The unbalanced antennas **81** and **82** have a shape with 180-degree rotational symmetry about the rotation axis 23b that is the reverse axis of the upper casing 21 with respect to the facing section **22a.** Since the unbalanced antennas **81** and **82** separately operate, they may be separated from each other. The unbalanced antennas **81** and **82** can also be arranged in various shapes in the same way as the antenna elements **43a** and **43b** of the portable wireless device **10** according to the first embodiment.

The switching circuit **83** is constructed of PIN (P-Intrinsic-N) diodes, band switching diodes or the like.

The sensor unit **84** is constructed of, for example, a permanent magnet (not shown) provided in the lower casing **22,** a magnetometer (not shown) that is a coil and the like provided in the upper casing **21** and is in face to face relationship with the permanent magnet in the lower casing **22.**

Next, the operation of the portable wireless device **80** will be described

The control unit **85** causes either one of the unbalanced antennas **81** and **82** that is farther from the lower casing **22** and the unbalanced transmit-receive radio frequency circuit **46** to be connected with the switching circuit **83** in accordance to the detection result from the sensor unit **84.** Thus, in the portable wireless device **80,** the unbalanced antenna **82** that is farther from the lower casing **22** is used for communications in the first facing state shown in Fig. **11(a)** while the unbalanced antenna **81** that is farther from the lower casing **22** is used for communications in the second facing state shown in Fig. **11(b)****.**

As described above, the portable wireless device **80** can maintain the performance of the antenna used for communications with another device, without being affected by the state of the housing fitted with the antenna even if the housing is rotated around the rotation axis thereof by 180 degrees. Thus, the portable wireless device **80** can exhibit stable sensitivity when performing communications regardless of whether the upper casing **21** is in the first state or in the second state.

Also, the portable wireless device **80** has a high antenna efficiency since either one of the unbalanced antennas **81** and **82** which is farther from the lower casing **22,** or which is not significantly affected by the ground substrate and the like provided in the lower casing **22,** is used for communications.

In the portable wireless device **80,** the detecting means has the sensor unit **84.** The detecting means, however, may have a component other than the sensor unit **84.** The detecting means, for example, may detect the state of the upper casing **21** with respect to the facing section **22a** based on the type of an application in use.

The present invention is not limited to the above-described embodiment in which the casing provided with the antenna can be reversed 180 degrees with respect to the other casing and the antenna has a shape with 180-degree rotational symmetry about the reverse axis. Even in the case that the casing provided with the antenna can be rotated through a predetermined angle other than 180 degrees with respect to the other casing, the predetermined angle may be any angle as long as the antenna has a shape with rotational symmetry about the rotation axis of the casing provided with the antenna.

The present invention is not limited to the above-described embodiment in which the antenna comprises two antenna elements. The antenna may comprise three or more antenna elements as long as the antenna provided in the casing has a shape with rotational symmetry about the reverse axis of the casing provided with the antenna without being affected by the state of the casing even if the casing is rotated around the rotation axis thereof by a predetermined angle.

### Industrial Applicability of the Present Invention

As disclosed above, the portable wireless device according to the present invention is capable of maintaining the performance of the antenna without being affected by the state of the casing even if the casing is rotated around the rotation axis thereof by a predetermined angle, and is useful as a cellular phone, personal digital assistance and the like.

## Claims

1. A portable wireless device, comprising:
a housing provided with a balanced antenna, and
a facing section to be faced with said housing,
said portable wireless device having two states including a first facing state in which said housing is in face to face relationship with said facing section and a second facing state in which said housing rotated around a rotation axis thereof by a predetermined angle is in face to face relationship with the facing section, and
said balanced antenna has a shape with said predetermined angle of rotational symmetry about said rotation axis of said housing with respect to said facing section.

2. A portable wireless device, comprising:
a housing provided with a balanced antenna; and
a facing section to be faced with said housing,
said portable wireless device having two states including a first facing state in which said housing is in face to face relationship with said facing section and a second facing state in which said housing rotated around a rotation axis thereof by a predetermined angle is in face to face relationship with the facing section,
said balanced antenna has a shape symmetrical about a predetermined axis pointed in a direction perpendicular to the surface of said facing section, said predetermined axis being perpendicular to said rotation axis, under the condition that said housing is in face to face relationship with said facing section, or under the condition that said housing rotated around a rotation axis thereof by a predetermined angle is in face to face relationship with said facing section.

3. A portable wireless device as set forth in claim 1, further comprising a balanced feeder circuit that feeds said balanced antenna and is disposed on said rotation axis.

4. A portable wireless device as set forth in claim 2, further comprising a balanced feeder circuit that feeds said balanced antenna and is disposed on said rotation axis.

5. A portable wireless device as set forth in claim 3, wherein
said balanced antenna has a plurality of antenna elements extending from said balanced feeder circuit, and
each of said plurality of antenna elements is equal in length to or greater in length than a half of a wavelength of a current flowing through each of said plurality of antenna elements.

6. A portable wireless device as set forth in claim 4, wherein
said balanced antenna has a plurality of antenna elements extending from said balanced feeder circuit,
each of said plurality of antenna elements is equal in length to or greater in length than a half of a wavelength of a current flowing through each of said plurality of antenna elements.

7. A portable wireless device as set forth in claim 1, further comprising a balanced-unbalanced transformer and an unbalanced feeder circuit for feeding said balanced antenna through said balanced-unbalanced transformer.

8. A portable wireless device as set forth in claim 2, further comprising a balanced-unbalanced transformer and an unbalanced feeder circuit for feeding said balanced antenna through said balanced-unbalanced transformer.

9. A portable wireless device as set forth in claim 1, further comprising an unbalanced feeder circuit, a ground unit and a matching circuit for connecting said unbalanced feeder circuit and said ground unit with said balanced antenna.

10. A portable wireless device as set forth in claim 2, further comprising an unbalanced feeder circuit, a ground unit and a matching circuit for connecting said unbalanced feeder circuit and said ground unit with said balanced antenna.

11. A portable wireless device, comprising:
a housing provided with two unbalanced antennas; and
a facing section to be faced with said housing;
detecting means for detecting the state of said housing held by said facing section; and
switching means for switching one of said two unbalanced antennas to the other unbalanced antenna that is used for communications in accordance with a result of the detection performed by said detecting means,
said portable wireless device having two states including a first facing state in which said housing is in face to face relationship with said facing section and a second facing state in which said housing rotated around a rotation axis thereof by a predetermined angle is in face to face relationship with the facing section, and
said two unbalanced antennas having a shape symmetrical about a rotation axis of said housing.
